# EUROPÄISCHE PATENTSCHRIFT

(11) **EP 2 795 345 B1**
(45) Veröffentlichungstag und Bekanntmachung des Hinweises auf die Patenterteilung: **06.11.2019**
(21) Anmeldenummer: 12756664.4
(22) Anmeldetag: 08.09.2012
(51) Int. Cl.: G01P 21/00, B60T 8/88

(54) **VERFAHREN UND EINRICHTUNG ZUM BESTIMMEN DER EINBAULAGE EINES SENSORMODULS IN EINEM FAHRZEUG SOWIE FAHRZEUG MIT EINER DERARTIGEN EINRICHTUNG**
METHOD AND DEVICE FOR DETERMINING THE INSTALLATION POSITION OF A SENSOR MODULE IN A VEHICLE, AND VEHICLE HAVING SUCH A DEVICE
PROCÉDÉ ET DISPOSITIF POUR LA DÉTERMINATION DE LA POSITION DE MONTAGE D'UN MODULE CAPTEUR DANS UN VÉHICULE ET VÉHICULE DOTÉ D'UN TEL DISPOSITIF

(30) Priorität: 21.12.2011 DE 102011121822
(43) Veröffentlichungstag der Anmeldung: 29.10.2014
(73) Patentinhaber: WABCO GmbH, 30453 Hannover (DE)
(72) Erfinder: KOPPER, Heiko, 31515 Wunstorf (DE); MICHAELSEN, Arne, 30926 Seelze (DE); MUNKO, Tobias, 30459 Hannover (DE)
(74) Vertreter: Lauerwald, Jörg
(86) Internationale Anmeldenummer: PCT/EP2012/003776
(87) Internationale Veröffentlichungsnummer: WO 2013/091741

(56) Entgegenhaltungen:
- EP-B1- 1 578 651
- DE-A1- 19 844 880
- DE-A1- 19 844 911
- DE-A1-102007 027 556

## Beschreibung

Die Erfindung betrifft ein Verfahren sowie eine Einrichtung zum Bestimmen der Einbaulage eines Sensormoduls in einem Fahrzeug.

Aus DE 100 02 685 A1 sowie EP 1 578 651 B1 sind Systeme bekannt, mittels denen ein fehlerhafter Einbau von Sensormitteln in einem Fahrzeug erkannt werden soll.

DE 100 02 685 A1 geht bspw. davon aus, dass ein Gierwinkelgeschwindigkeitssensor um 180° verdreht bzgl. der gewünschten Winkellage eingebaut wird, also z.B. über Kopf. Ein derart unrichtiger Einbau führt zu unplausiblen Werten des abgegebenen Gierwinkelgeschwindigkeitssignals und kann somit erkannt werden.

EP 1 578 651 B1 geht ebenfalls davon aus, dass Sensoren trotz mechanischer Kodierung falsch verbaut sind und zielt daher auf eine Überprüfung der Einbaulage eines Sensors im Betrieb ab.

Die DE102007027556A1 offenbart eine Plausibilitätsprüfung der Messdaten eines Beschleunigungssensors mit Hilfe einer durch den Fahrer vorgegebenen Bremsverzögerungsänderung.

Die DE19844880A1 offenbart eine Vorrichtung und ein Verfahren zur Überwachung eines in einem Fahrzeug angeordneten Beschleunigungssensors, wobei abhängig von Fahrmanövern des Fahrzeuges ein Mittelwert der Beschleunigungsgröße ermittelt und mit einem Schwellwert verglichen wird. Durch die Mittelwertbildung werden aus der Beschleunigungsgröße die von den Fahrmanövern stammenden Anteile der Beschleunigungsgröße herausgefiltert, was bedeutet, dass die Überwachung des Beschleunigungssensors unabhängig von der Fahrbewegung durchgeführt wird und Veränderungen der Beschleunigungsgröße, die beispielsweise aufgrund einer Kurvenfahrt vorliegen, nicht berücksichtigt.

Die DE19844911A1 offenbart eine Vorrichtung und ein Verfahren zur Ermittlung einer die Einbaulage eines in einem Fahrzeug angeordneten Beschleunigungssensors beschreibenden Größe, wobei dies in Abhängigkeit der Fahrzeuggeschwindigkeit für einen definierten Fahrzustand, in dem das Fahrzeug nahezu still steht, erfolgt.

Der Erfindung liegt daher die Aufgabe zugrunde, die Bestimmung der Einbaulage von Sensormodulen in einem Fahrzeug zu verbessern. Die Erfindung löst diese Aufgabe mit einem Verfahren gemäß Anspruch 1 sowie einer Einrichtung gemäß Anspruch 9. Darüber hinaus löst die Erfindung diese Aufgabe mittels eines Fahrzeugs mit einer derartigen Einrichtung gemäß Anspruch 17.

Ein erfindungsgemäßes Sensormodul einer Fahrdynamikregelung weist Sensoren, wie Beschleunigungssensoren zur Messung einer Beschleunigung in Fahrtrichtung und/oder quer zur Fahrtrichtung und ggf. in vertikaler Richtung, sowie einen Gierratensensor und ggf. weitere Sensoren, wie Nick- oder Rollratensensoren, auf, wobei ein derartiges Sensormodul neben derartigen Sensoren entweder mit oder ohne integrierter Steuerelektronik ausgebildet ist. Ferner ist das Sensormodul mit weiteren Sensoren funktional, insbesondere über eine elektrische, optische und/oder Funk-Verbindung, verbunden, wie Raddrehzahlsensoren zum Erfassen der Raddrehzahl. Außerdem kann das Sensormodul mit einem Lenkwinkelsensor zum Erfassen eines Lenkwinkels funktional, insbesondere über eine elektrische, optische und/oder Funk-Verbindung, verbunden sein. Die Steuerelektronik wirkt durch gezieltes Abbremsen einzelner Räder einem etwaigen Ausbrechen des Fahrzeugs entgegen.

Sofern das Sensormodul lediglich die Sensoren bzw. keine Steuerelektronik aufweist, befindet sich die Steuerelektronik in einem separaten Modul, welches mittels entsprechender Signalleitungen bzw. Datenleitungen mit dem Sensormodul verbunden ist.

Ein derartiges erfindungsgemäßes Sensormodul einer Fahrdynamikregelung, entweder mit oder ohne Steuerungselektronik, wird in einem Fahrzeug meist in der Nähe des Schwerpunkts verbaut. Insbesondere Nutzfahrzeuge weisen oftmals einen Tragrahmen mit Längs- und Querträgern auf, welche mit einem Standard-Lochraster versehen sind. Die Erfindung hat jedoch erkannt, dass insbesondere nach einem Werkstattaufenthalt, bei welchen das Sensormodul demontiert wurde, die Gefahr besteht, dass das Sensormodul nicht wieder an seinem ursprünglichen Verbauungsort montiert wird. D.h., wenn bspw. das Sensormodul für eine Montage am Längsträger vorgesehen ist, besteht die Gefahr, dass während einer Wartung das Sensormodul versehentlich am Querträger angebracht wird. Umgekehrt ist ebenfalls die Gefahr gegeben, dass ein für eine Montage an einem Querträger vorgesehenes Sensormodul nach einer Demontage am Längsträger angebracht wird.

Die unrichtige Montage am falschen Träger führt jedoch dazu, dass das Sensormodul Sensorsignale liefern wird, welche nicht den tatsächlichen Gegebenheiten während der Fahrt des Fahrzeugs entsprechen. Derart fehlerhafte Sensorsignale führen jedoch dazu, dass eine Fahrdynamikregelung Fehleingriffe durchführen kann, die u. U. zu gefährlichen Fahrzuständen führen können.

Die Erfindung hat ferner erkannt, dass diese Art eines Fehleinbaus typisch für Nutzfahrzeuge mit standardisierten Lochrastern in Quer- und Längsträgern ist und gleichwohl mit einfachen Mitteln erkannt werden kann.

Die Erfindung sieht daher ein Verfahren bzw. eine Einrichtung zum Bestimmen der Einbaulage eines Sensormoduls in einem Fahrzeug, insbesondere Nutzfahrzeug vor, wobei festgestellt wird, ob das Sensormodul mit seiner Längsachse längs oder quer im Fahrzeug verbaut ist. Die Erfindung erkennt daher einen von mehreren, insbesondere zwei möglichen Einbauzuständen, welche aufgrund einer Verwechslung des Längs- bzw. Querträgers als Einbauort resultieren.

Erfindungsgemäß ist vorgesehen, dass das Sensormodul einen Längsbeschleunigungssensor zum Messen einer Modul-Längsbeschleunigurig in Richtung der Längsachse des Sensormoduls und/oder einen Querbeschleunigungssensor zum Messen einer Modul-Querbeschleunigung quer zur Längsachse des Sensormoduls aufweist. Erfindungsgemäß ist ferner ein Vergleicher vorgesehen, so dass eine gemessene Modul-Längsbeschleunigung und/oder eine gemessene Modul-Querbeschleunigung während der Fahrt des Fahrzeugs mit einer anderweitig ermittelten Fahrzeug-Längsbeschleunigung und/oder einer anderweitig ermittelten Fahrzeug-Querbeschleunigung verglichen wird.

Die Fahrzeug-Längsbeschleunigung wird bspw. aus den Raddrehzahlen oder unter Verwendung von Positionsdaten eines Satellitennavigationssystems oder unter Verwendung von Daten eines fahrzeugeigenen Radarsystems berechnet oder mittels eines zweiten Beschleunigungssensors gemessen. Die Fahrzeug-Querbeschleunigung wird bspw. aus der Fahrzeuggeschwindigkeit und der Fahrzeuggierrate berechnet. Dabei kann die Fahrzeuggeschwindigkeit bspw. aus den Raddrehzahlen oder unter Verwendung von Positionsdaten eines Satellitennavigationssystems oder unter Verwendung von Daten eines fahrzeugeigenen Radarsystems berechnet werden. Alternativ wird die Fahrzeug-Querbeschleunigung mittels eines weiteren Beschleunigungssensors gemessen. Gemäß einer weiteren Alternative kann die Fahrzeug-Querbeschleunigung, insbesondere ausschließlich, aus den Raddrehzahlen berechnet werden. Hierzu werden die Raddrehzahlen eines oder mehrerer kurveninnerer Räder sowie einer oder mehrerer kurvenäußerer Räder berücksichtigt. Diese Raddrehzahlen geben Aufschluss über den Radius einer Kurve sowie die Fahrzeuggeschwindigkeit, woraus sich die Querbeschleunigung ergibt.

Anhand des Vergleichs wird wenigstens ein Übereinstimmungsgrad, welcher die Übereinstimmung einer gemessenen Modul-Beschleunigung und einer berechneten Fahrzeug-Beschleunigung repräsentiert, ermittelt. Erfindungsgemäß sind ferner Mittel zum Bestimmen der Einbaulage vorgesehen, die anhand des Übereinstimmungsgrades die Einbaulage des Sensormoduls bestimmen, d.h. ob das Sensormodul mit seiner Längsachse längs zur Fahrzeuglängsachse oder quer zur Fahrzeuglängsachse verbaut ist.

Dank der Erfindung kann ein simpler Einbaufehler ohne Weiteres erkannt werden, ohne dass es hierzu komplizierter zusätzlicher Einrichtungen bedürfte, die nicht ohnehin in einem modernen Fahrzeug vorgesehen sind. Ferner kann dank der Erfindung ein Fahrdynamikregelsystem gegen Fehleinbauten seines Sensormoduls abgesichert werden, insbesondere gegen eine Verwechslung eines vorgesehenen Quer- bzw. Längseinbaus.

Gemäß einer besonderen Ausführungsform ist vorgesehen, dass die Mittel zum Bestimmen der Einbaulage derart ausgebildet sind, dass während einer nicht-beschleunigten Kurvenfahrt der Übereinstimmungsgrad zwischen der dabei gemessenen Modul-Längsbeschleunigung und der dabei berechneten Fahrzeug-Querbeschleunigung ermittelt wird und, falls der Übereinstimmungsgrad eine vorbestimmte Schwelle überschreitet, die Einbaulage des Sensormoduls derart bestimmt wird, dass seine Längsachse quer zum Fahrzeug ausgerichtet ist. In diesem Fall ist nämlich offenbar die Einbaulage nicht korrekt. In diesem Fall können bspw. die Signale einzelner Sensoren vertauscht werden, um wieder mit richtigen Signalen die Fahrdynamikregelung durchführen zu können. Ggf. sind dann jedoch die Sensorwerte numerisch umzurechnen, damit die Fahrdynamikregelung mit richtigen Werten versorgt wird. Sofern dies jedoch nicht möglich ist, wird vorteilhafterweise ein Fehlersignal ausgegeben, um den Einbaufehler zu signalisieren.

Falls der vorstehend genannte Übereinstimmungsgrad eine vorbestimmte Schwelle unterschreitet, wird die Einbaulage des Sensormoduls derart bestimmt, dass seine Längsachse längs zum Fahrzeug ausgerichtet ist. In diesem Fall entspricht die Ausrichtung der Längsachse des Sensormoduls der Fahrzeuglängsachse. Es wird dann davon ausgegangen, dass die Einbaulage korrekt ist und kein Einbaufehler vorliegt. In einem derartigen Fall werden die Sensorsignale der Fahrdynamikregelung zugeführt.

Bei einer weiteren besonderen Ausführungsform sind die Mittel zum Bestimmen der Einbaulage derart ausgebildet, dass während einer nicht-beschleunigten Kurvenfahrt der Übereinstimmungsgrad zwischen der dabei gemessenen Modul-Querbeschleunigung und der dann berechneten Fahrzeug-Querbeschleunigung ermittelt wird und, falls der Übereinstimmungsgrad eine vorbestimmte Schwelle überschreitet, die Einbaulage des Sensormoduls derart bestimmt wird, dass seine Längsachse längs zum Fahrzeug ausgerichtet ist. Falls jedoch der Übereinstimmungsgrad eine vorbestimmte Schwelle unterstreiten sollte, wird die Einbaulage des Sensormoduls derart bestimmt, dass seine Längsachse quer zum Fahrzeug ausgerichtet ist. Bei dieser Ausführungsform werden somit die gemessene Modul-Querbeschleunigung sowie die berechnete Fahrzeug-Querbeschleunigung miteinander verknüpft, um eine Aussage über die Einbaulage des Sensormoduls zu liefern.

Gemäß einer weiteren besonderen Ausführungsform sind die Mittel zum Bestimmen der Einbaulage derart ausgebildet, dass während einer beschleunigten Geradeausfahrt der Übereinstimmungsgrad zwischen der dann gemessenen Modul-Querbeschleunigung und der dann berechneten Fahrzeug-Längsbeschleunigung ermittelt wird, und, falls der Übereinstimmungsgrad eine vorbestimmte Schwelle überschreitet, die Einbaulage des Sensormoduls derart bestimmt wird, dass seine Längsachse quer zum Fahrzeug ausgerichtet ist. Falls jedoch der Übereinstimmungsgrad eine vorbestimmte Schwelle unterschreiten sollte, wird die Einbaulage des Sensormoduls derart bestimmt, dass seine Längsachse längs zum Fahrzeug ausgerichtet ist. Bei dieser Ausführungsform wird die gemessene Fahrzeug-Querbeschleunigung mit der berechneten Modul-Längsbeschleunigung verknüpft, um eine Aussage über die Einbaurichtung des Sensormoduls zu treffen.

Bei einer weiteren besonderen Ausführungsform sind die Mittel zum Bestimmen der Einbaulage derart ausgebildet, dass während einer beschleunigten Geradeausfahrt der Übereinstimmungsgrad zwischen der dann gemessenen Modul-Längsbeschleunigung und der dann berechneten Fahrzeug-Längsbeschleunigung ermittelt wird, und, falls der Übereinstimmungsgrad eine vorbestimmte Schwelle überschreitet, die Einbaulage des Sensormoduls derart bestimmt wird, dass seine Längsachse längs zum Fahrzeug ausgerichtet ist. Falls der Übereinstimmungsgrad eine vorbestimmte Schwelle unterschreitet, wird die Einbaulage des Sensormoduls derart bestimmt, dass seine Längsachse quer zum Fahrzeug ausgerichtet ist. Bei dieser Ausführungsform wird somit die gemessene Modul-Längsbeschleunigung mit der berechneten Fahrzeug-Längsbeschleunigung verknüpft, um eine Aussage über die Einbauausrichtung des Sensormoduls treffen zu können.

Zusammengefasst werden somit die Sensorsignale, welche eine Modul-Längsbeschleunigung bzw. eine Modul-Querbeschleunigung angeben, während der Fahrt gegen eine - bspw. aus den Raddrehzahlen berechnete - Fahrzeug-Längsbeschleunigung und gegen eine - bspw. aus der Fahrzeuggeschwindigkeit und der Gierrate des Fahrzeugs berechneten - Fahrzeug-Querbeschleunigung verglichen. Passt dann die gemessene Modul-Längsbeschleunigung bei nicht-beschleunigter Kurvenfahrt gut zur alternativ ermittelten Fahrzeug-Querbeschleunigung, d.h. bspw. der berechneten Fahrzeug-Querbeschleunigung, in der Weise, dass ein hoher Übereinstimmungsgrad zwischen der gemessenen Modul-Längsbeschleunigung und der berechneten Fahrzeug-Querbeschleunigung besteht, wird davon ausgegangen, dass die Einbaulage des Sensormoduls nicht korrekt, d.h. nicht wie angenommen, ist, sondern dass das Sensormodul am Querträger statt am Längsträger oder am Längsträger statt am Querträger verbaut worden ist.

Sofern die gemessene Modul-Querbeschleunigung bei beschleunigter Geradeausfahrt gut zur alternativ ermittelten, d.h. bspw. berechneten Fahrzeug-Längsbeschleunigung passt, kann ebenfalls davon ausgegangen werden, dass die Einbaulage nicht korrekt, d.h. nicht wie angenommen, ist und dass die Montage des Sensormoduls am Querträger statt am Längsträger oder umgekehrt stattgefunden hat.

Darüber hinaus können jedoch auch die gemessene Modul-Längsbeschleunigung mit der berechneten Fahrzeug-Längsbeschleunigung verknüpft und deren Übereinstimmungsgrad untersucht werden. Stimmen diese Beschleunigungen im Wesentlichen überein, kann davon ausgegangen werden, dass das Sensormodul richtig verbaut ist. Stimmen sie hingegen nicht annähernd überein, muss davon ausgegangen werden, dass das Sensormodul falsch bzw. nicht wie angenommen verbaut worden ist.

Darüber hinaus können bei nicht-beschleunigter Kurvenfahrt die gemessene Modul-Querbeschleunigung und die vorzugsweise berechnete Fahrzeug-Querbeschleunigung miteinander verglichen werden. Sofern diese Beschleunigungen im Wesentlichen übereinstimmen, kann davon ausgegangen werden, dass das Sensormodul richtig verbaut ist. Sofern sie jedoch nicht übereinstimmen, kann davon ausgegangen werden, dass das Sensormodul falsch bzw. nicht wie angenommen verbaut worden ist.

Gemäß einer weiteren besonderen Ausführungsform wird eine nicht-beschleunigte Kurvenfahrt festgestellt, wenn die berechnete Fahrzeug-Längsbeschleunigung null ist oder unterhalb eines unteren Längsbeschleunigungsschwellenwertes liegt und die berechnete Fahrzeug-Querbeschleunigung oberhalb eines oberen Querbeschleunigungsschwellenwertes liegt. Eine beschleunigte Geradeausfahrt wird hingegen festgestellt, wenn die berechnete Fahrzeug-Längsbeschleunigung oberhalb eines oberen Längsbeschleunigungsschwellenwertes liegt sowie die berechnete Fahrzeug-Querbeschleunigung null ist oder unterhalb eines unteren Querbeschleunigungsschwellenwertes liegt.

Diese oberen Schwellenwerte ermöglichen eine eindeutige Bestimmung der Bewegungsart, d.h. ob eine nicht-beschleunigte Kurvenfahrt oder eine beschleunigte Geradeausfahrt vorliegt.

Die unteren Schwellenwerte ermöglichen Messungenauigkeiten zu tolerieren und dabei trotzdem die richtige Bewegungsart, d.h. nicht-beschleunigte Kurvenfahrt oder beschleunigte Geradeausfahrt, festzustellen.

Gemäß der Ausführungsform ist vorgesehen, dass die auf erfindungsgemäße Weise bestimmte Einbaulage mit einer Soll-Einbaulage verglichen wird und bei einer Diskrepanz zwischen diesen beiden Einbaulagen ein Fehlersignal erzeugt wird. Ein derartiges Fehlersignal kann als akustisches und/oder optisches und/oder haptisches Warnsignal ausgegeben werden, um den Fahrer zu warnen, dass Sensoren des Fahrzeugs bzw. der Fahrdynamikregelung nicht richtig arbeiten werden. Der Fahrer kann dann bspw. manuell die Funktionen der Fahrdynamikregelung deaktivieren. Zusätzlich oder alternativ kann die Deaktivierung aber auch direkt durch das Fehlersignal erfolgen, um Fehlfunktionen der Fahrdynamikregelung zu vermeiden.

Gemäß einer weiteren besonderen Ausführungsform wird die Einbaulage in einem Initialisierungsmodus des Sensormoduls bestimmt und die auf diese Weise bestimmte Einbaulage dauerhaft im Sensormodul, der Einrichtung zum Bestimmen der Einbaulage des Sensormoduls und/oder im Fahrzeug gespeichert. Auf diese Weise kann vorteilhaft eine automatische Erkennung der Einbaulage eines Sensormoduls im Fahrzeug bereits im Produktionswerk des Fahrzeugs stattfinden. Hierdurch wird eine Parametrierung überflüssig. Vielmehr "erlernt" das Sensormodul, die Einrichtung zum Bestimmen der Einbaulage des Sensormoduls bzw. das Fahrzeug selbst die Einbaulage des Sensormoduls, solange sich das Sensormodul, die Einrichtung zum Bestimmen der Einbaulage des Sensormoduls bzw. das Fahrzeug im Auslieferungszustand bzw. Initialisierungsmodus befindet. Auf einer ersten Fahrtstrecke im Werk wird dann automatisch die Einbaulage erkannt und zur Verwendung im weiteren Betrieb des Fahrzeugs gespeichert.

Weitere vorteilhafte Ausführungsformen ergeben sich aus den Unteransprüchen sowie aus den anhand der Zeichnung näher erläuterten Ausführungsbeispielen. In der Zeichnung zeigen:
- Fig. 1: eine vereinfachte, schematische Draufsicht auf ein Fahrzeug zur Veranschaulichung möglicher Einbaupositionen eines Sensormoduls;
- Fig. 2: die Möglichkeiten der Verknüpfung der gemessenen Modul-Längsbzw. Querbeschleunigungen und der berechneten Fahrzeug-Längsbzw. Querbeschleunigungen und
- Fig. 3: ein Flussdiagramm zur Veranschaulichung eines erfindungsgemäßen Ausführungsbeispiels.

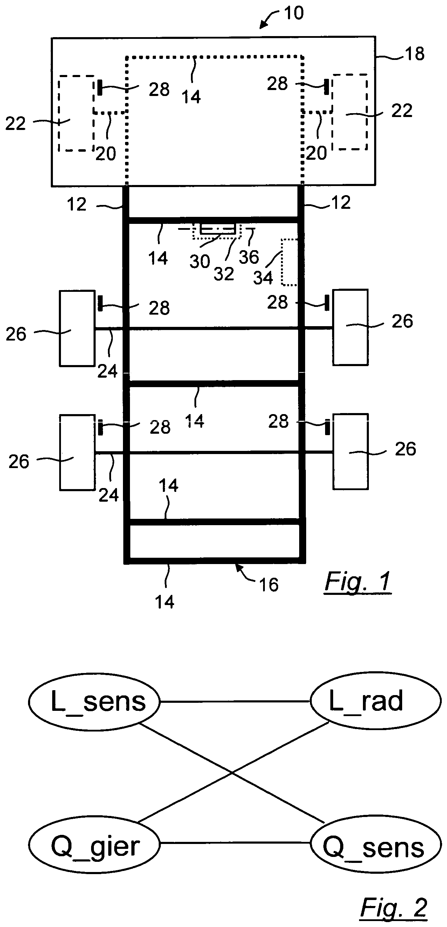

Fig. 1 zeigt in vereinfachter schematischer Draufsicht ein Fahrzeug 10, welches bevorzugt ein Nutzfahrzeug und im Ausführungsbeispiel ein Zugfahrzeug ist. Dieses Fahrzeug 10 weist mehrere Längsträger 12 und mehrere Querträger 14 auf, welche zusammen einen Rahmen 16 bilden. Der Rahmen 16 trägt Aufbauten, insbesondere die Fahrerkabine 18. Ferner sind zumindest mittelbar auch die Achsen 20 der Vorderräder 22 sowie eine oder mehrere Hinterachsen 24 mit Hinterrädern 26 angeordnet.

Das Fahrzeug 10 weist ein Fahrdynamikregelungssystem auf. Hierbei handelt es sich um ein Fahrassistenzsystem, welches durch gezieltes Abbremsen einzelner Vorderräder 22 oder Hinterräder 26 einem etwaigen Ausbrechen des Fahrzeugs 10 entgegenwirkt. Durch gezieltes Abbremsen einzelner dieser Räder 22, 26 versucht das Fahrdynamikregelungssystem ein Schleudern des Fahrzeugs 10 zu verhindern. Hierzu ist ein Lenkwinkelsensor vorgesehen, welcher einen Lenkwinkelwunsch des Fahrers in Bezug auf die gewünschte Fahrtrichtung erfasst. Ferner weist das Fahrzeug Drehzahlsensoren 28 an den Rädern 22, 26 auf, welche die Drehzahlen der einzelnen Räder 22, 26 erfassen.

Mit Hilfe der Drehzahlsensoren kann ferner eine Geschwindigkeit des Fahrzeugs 10 ermittelt werden.

Ein Sensormodul 30 ist vorteilhafterweise am Rahmen 16 verbaut und zwar entweder an einem der Querträger 14 oder an einem der Längsträger 12. Das Sensormodul 30 ist gemäß Fig. 1 an einer Position 32 an einem Querträger 14 verbaut. Es kann jedoch auch an einer Position 34 an einem Längsträger verbaut sein. Ein Grund hierfür kann darin liegen, dass sowohl die Längsträger 12 als auch die Querträger 14 ein (standardisiertes) Lochraster aufweisen mit jeweils gleichen Lochabständen, in welche das Sensormodul 30 verschraubt werden kann. Das Sensormodul kann aber auch an Winkeln verbaut sein, die ebenfalls unterschiedliche Einbaulagen ermöglichen.

Das Sensormodul 30 kann somit mit seiner Längsachse 36 quer im Fahrzeug verbaut werden, so wie dies mit der Position 32 der Fall wäre. Das Sensormodul 30 kann jedoch auch längs im Fahrzeug verbaut sein, so wie dies durch die Position 34 repräsentiert wird. Diese Ausrichtung ist nicht beliebig vertauschbar, da das Sensormodul wenigstens einen Gierratensensor sowie einen Querbeschleunigungssensor zum Messen einer Modul-Querbeschleunigung quer zur Längsachse 36 des Sensormoduls 30 und einen Längsbeschleunigungssensor zum Messen einer Modul-Längsbeschleunigung in Richtung der Längsachse 36 des Sensormoduls 30 aufweist. Sofern die Längsachse 36 des Sensormoduls 30 in Längsrichtung des Fahrzeugs 10 orientiert ist, misst der Längsbeschleunigungssensor eine Längsbeschleunigung des Fahrzeugs 10 und der Querbeschleunigungssensor eine Querbeschleunigung des Fahrzeugs 10. Sofern jedoch das Sensormodul 30 bspw. an der Position 34 an einem Längsträger 12 verbaut ist, misst der Längsbeschleunigungssensor eine Querbeschleunigung des Fahrzeugs 10 und der Querbeschleunigungssensor eine Längsbeschleunigung des Fahrzeugs 10.

Das Sensormodul 30 kann ferner einen weiteren Beschleunigungssensor zum Messen einer vertikalen Beschleunigung des Sensormoduls aufweisen, der jedoch für Standardkonfigurationen von Fahrdynamikregelungen entbehrlich ist.

Ferner weist das Sensormodul 30 einen Gierratensensor auf. Zusätzlich kann das Sensormodul 30 auch einen Rollratensensor und/oder einen Nickratensensor aufweisen.

Eine Vertauschung der Einbaupositionen 32, 34 kann auch dazu führen, dass die Werte, welche der Rollratensensor und der Nickratensensor liefern, verkehrt sind.

Erfindungsgemäß werden daher zum Bestimmen der Einbaulage des Sensormoduls 30 die von den Sensoren innerhalb des Sensormoduls 30 gemessenen Werte mit vergleichbaren Größen verglichen, welche teilweise oder vollständig außerhalb des Sensormoduls 30 erfasst werden. Die Fahrzeug-Längsbeschleunigung L_rad wird bspw. aus den Raddrehzahlen berechnet, welche mittels der Drehzahlsensoren 28 erfasst werden. Sie kann zusätzlich oder alternativ aber auch mittels Positionsdaten eines Satellitennavigationssystems oder mittels Daten eines fahrzeugeigenen Radarsystems berechnet oder mittels eines weiteren Beschleunigungssensors gemessen werden. Die Querbeschleunigung des Fahrzeugs 10 wird aus der Fahrzeuggeschwindigkeit sowie der Gierrate errechnet, wobei diese Gierrate entweder mit dem Gierratensensor des Sensormoduls 30 oder mit einem anderen Gierratensensor ermittelt wird. Da sowohl bei einer Einbaulage gemäß der Position 32 als auch bei einer Einbaulage gemäß der Position 34 der Gierratensensor eine Gierrate des Fahrzeugs ermitteln wird, die im Wesentlichen in beiden Fällen die gleiche ist, kann auch diese Gierrate für die Berechnung der Fahrzeug-Querbeschleunigung Q_gier herangezogen werden. Zusätzlich oder alternativ kann die Fahrzeug-Querbeschleunigung mittels eines weiteren Beschleunigungssensors gemessen werden und/oder aus den Raddrehzahlen berechnet werden.

Auf diese Weise erhält man eine mittels des Sensormoduls 30 gemessene Modul-Längsbeschleunigung L_sens. Ferner erhält man auf diese Weise eine mittels des Sensormoduls 30 gemessene Modul-Querbeschleunigung Q_sens.

Ferner erhält man die berechnete oder gemessene Fahrzeug-Längsbeschleunigung L_rad sowie die berechnete oder gemessene Fahrzeug-Querbeschleunigung Q_gier.

Fig. 2 veranschaulicht schematisch, wie diese gemessenen Größen der Modul-Längsbeschleunigung L_sens bzw. Modul-Querbeschleunigung Q_sens mit den berechneten oder gemessenen Größen der Fahrzeug-Längsbeschleunigung L_rad bzw. Fahrzeug-Querbeschleunigung Q_gier in Verbindung gesetzt werden können, um die Einbaulage des Sensormoduls 30 festzustellen. Insgesamt ergeben sich vier Möglichkeiten der Verknüpfung der gemessenen Beschleunigungen mit den berechneten Beschleunigungen.

Als erstes kann bei einer nicht-beschleunigten Kurvenfahrt die gemessene Modul-Längsbeschleunigung L_sens mit der berechneten oder gemessenen Fahrzeug-Querbeschleunigung Q_gier verglichen werden. Stimmt die gemessene Modul-Längsbeschleunigung L_sens mit der berechneten oder gemessenen Fahrzeug-Querbeschleunigung Q_gier im Wesentlichen überein, kann daraus geschlossen werden, dass die Längsachse 36 des Steuermoduls 30 quer zur Fahrzeuglängsachse orientiert ist. Da die ermittelten Beschleunigungswerte nicht exakt übereinstimmen werden, wird ein Übereinstimmungsgrad der Beschleunigungswerte festgestellt. Überschreitet dieser Übereinstimmungsgrad eine vorbestimmte Schwelle, wird die Einbaulage des Sensormoduls 30 derart festgestellt, dass die Längsachse 36 des Steuermoduls 30 quer zum Fahrzeug 10 ausgerichtet ist. Dieser Vergleich wird bei nicht-beschleunigter Kurvenfahrt durchgeführt.

Falls hingegen ein Übereinstimmungsgrad für die Übereinstimmung von der gemessene Modul-Längsbeschleunigung L_sens und der berechneten bzw. gemessenen Fahrzeug-Querbeschleunigung Q_gier eine vorbestimmte Schwelle unterschreitet, wird festgestellt, dass die Längsachse 36 des Sensormoduls 30 längs zum Fahrzeug ausgerichtet ist.

Ferner kann bei einer nicht-beschleunigten Kurvenfahrt die gemessene Modul-Querbeschleunigung Q_sens mit der berechneten oder gemessenen Fahrzeug-Querbeschleunigung Q_gier verglichen und der Übereinstimmungsgrad dieser beiden Beschleunigungen festgestellt werden. Falls der Übereinstimmungsgrad eine vorbestimmte Schwelle überschreitet, wird die Einbaulage des Sensormoduls 30 derart festgestellt, dass seine Längsachse 36 längs zum Fahrzeug 10 ausgerichtet ist. Falls hingegen der Übereinstimmungsgrad eine vorbestimmte Schwelle unterschreitet, wird die Einbaulage des Sensormoduls 30 derart festgestellt, dass seine Längsachse 36 quer zum Fahrzeug ausgerichtet ist.

Ferner kann während einer beschleunigten Geradeausfahrt die gemessene Modul-Querbeschleunigung Q_sens mit der berechneten oder gemessenen Fahrzeug-Längsbeschleunigung L_rad verglichen werden. Stimmen diese Beschleunigungswerte im Wesentlichen überein, d.h. überschreitet der Übereinstimmungsgrad zwischen diesen Beschleunigungswerten eine vorbestimmte Schwelle, wird festgestellt, dass die Längsachse 36 des Sensormoduls 30 quer zum Fahrzeug 10 ausgerichtet ist. Sofern jedoch der Übereinstimmungsgrad eine vorbestimmte Schwelle unterschreitet, wird festgestellt, dass die Einbaulage des Sensormoduls 30 derart gewählt ist, dass seine Längsachse 36 längs zum Fahrzeug 10 ausgerichtet ist.

Ferner kann während einer beschleunigten Geradeausfahrt die gemessene Modul-Längsbeschleunigung L_sens mit der berechneten oder gemessenen Fahrzeug-Längsbeschleunigung L_rad verglichen werden. Stimmen diese Beschleunigungswerte im Wesentlichen überein, d.h. überschreitet der Übereinstimmungsgrad zwischen diesen Beschleunigungswerten eine vorbestimmte Schwelle, wird festgestellt, dass die Längsachse 36 des Sensormoduls 30 längs zum Fahrzeug 10 ausgerichtet ist. Sofern jedoch der Übereinstimmungsgrad eine vorbestimmte Schwelle unterschreitet, wird festgestellt, dass die Einbaulage des Sensormoduls 30 derart ist, dass die Längsachse 36 des Sensormoduls 30 quer zum Fahrzeug 10 ausgerichtet ist.

Die Unterscheidung, ob eine nicht-beschleunigte Kurvenfahrt oder eine beschleunigte Geradeausfahrt vorliegt, kann aus der Gierrate und den Raddrehzahlen ermittelt werden. Hierbei werden vorteilhafterweise Schwellenwerte festgelegt, die überschritten werden müssen, damit eine berechnete oder gemessene Fahrzeug-Längsbeschleunigung L_rad bzw. eine berechnete oder gemessene Fahrzeug-Querbeschleunigung Q_gier als signifikant betrachtet werden.

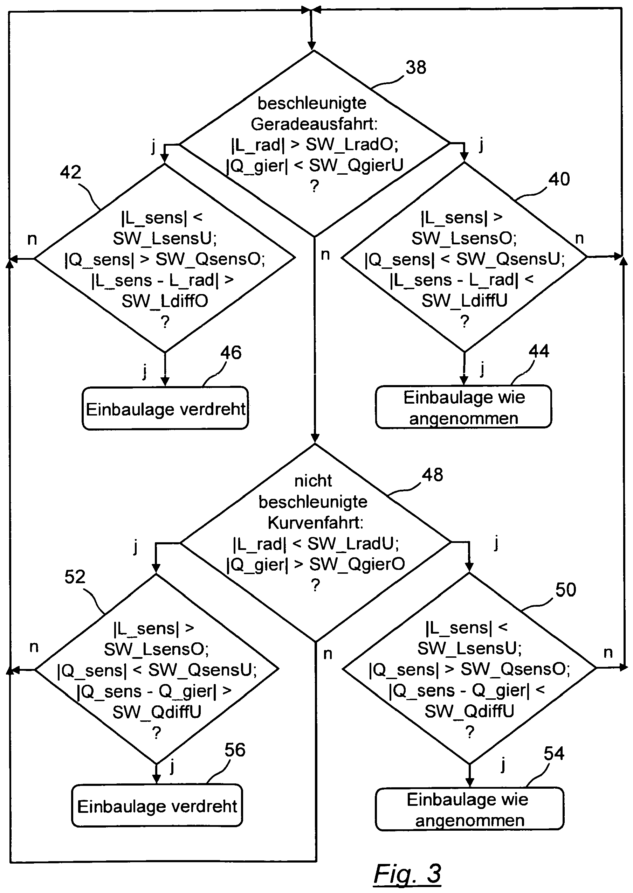

Fig. 3 zeigt ein Flussdiagramm zur Veranschaulichung eines erfindungsgemäßen Verfahrens.

Im Schritt 38 wird festgestellt, ob eine beschleunigte Geradeausfahrt vorliegt. Hierzu wird geprüft, ob der Betrag der berechneten oder gemessenen Fahrzeug-Längsbeschleunigung L_rad größer als ein oberer Längsbeschleunigungsschwellenwert SW_LradO ist und zugleich die berechnete oder gemessene Fahrzeug-Querbeschleunigung Q_gier betragsmäßig kleiner als ein unterer Querbeschleunigungsschwellenwert SW_QgierU oder gleich null ist. Sofern diese beiden Bedingungen erfüllt sind, erfolgt eine Verzweigung zum Schritt 40, in dem festgestellt wird, ob das Sensormodul 30 wie angenommen verbaut ist. Hierzu wird geprüft, ob die gemessene Modul-Längsbeschleunigung L_sens betragsmäßig größer ist als ein oberer Längsbeschleunigungsschwellenwert SW_LsensO. Ferner wird festgestellt, ob die gemessene Modul-Querbeschleunigung Q_sens betragsmäßig kleiner ist als ein unterer Querbeschleunigungsschwellenwert. Schließlich wird ein Übereinstimmungsgrad zwischen der gemessenen Modul-Längsbeschleunigung L_sens mit der berechneten oder gemessenen Fahrzeug-Längsbeschleunigung L_rad durch Differenzbildung dieser beiden Größen und Bildung des Betrags ermittelt. Ist die Differenz der beiden Größen betragsmäßig klein ist der Übereinstimmungsgrad groß. Dies wird dadurch festgestellt, dass die Differenz unterhalb eines unteren Längsbeschleunigungsdifferenzschwellenwertes SW_LdiffU liegt.

Sofern diese drei Abfragen jeweils bejaht werden können, wird festgestellt, dass das Sensormodul 30 richtig verbaut ist bzw. dass die Längsachse 36 des Sensormoduls 30 längs zum Fahrzeug 10 ausgerichtet ist.

Sofern im Schritt 38 alle Abfragen bejaht und somit eine beschleunigte Geradeausfahrt erkannt wird, erfolgt außerdem eine Verzweigung zum Schritt 42, mittels dem erkannt werden kann, dass die Einbaulage nicht der angenommenen Einbaulage entspricht. Mit diesem Schritt wird festgestellt, ob die gemessene Modul-Längsbeschleunigung L_sens betragsmäßig kleiner ist als ein unterer Längsbeschleunigungsschwellenwert SW_LsensU und ob die gemessene Modul-Querbeschleunigung Q_sens betragsmäßig größer ist als ein oberer Querbeschleunigungsschwellenwert SW_QsensO. Ferner wird der Übereinstimmungsgrad zwischen der gemessenen Modul-Längsbeschleunigung L_sens und der berechneten oder gemessenen Fahrzeug-Längsbeschleunigung L_rad ermittelt. Hierzu wird die betragsmäßige Differenz der beiden Längsbeschleunigungen ermittelt und geprüft, ob dieser Betrag einen oberen Längsbeschleunigungsdifferenzschwellenwert SW_LdiffO übersteigt. Sofern diese drei Abfragen jeweils bejaht werden können, wird festgestellt, dass das Sensormodul 30 nicht wie angenommen verbaut ist bzw. dass die Längsachse 36 des Sensormoduls 30 quer zum Fahrzeug verbaut ist.

Das Ergebnis der Bewertungen in den Schritten 40 und 42 wird ggf. im Schritt 44 bzw. 46 angezeigt. Im Schritt 44 wird dazu ein Signal erzeugt, welches angibt, dass die Einbaulage der angenommenen Einbaulage entspricht. Im Schritt 46 wird entsprechend ein Fehlersignal erzeugt, das angibt, dass die Einbaulage nicht der angenommenen Einbaulage entspricht.

Sofern die vorstehend genannten Bedingungen in den Schritten 40 bzw. 42 nicht erfüllt sind, erfolgt eine Verzweigung zurück zum Schritt 38.

Sofern im Schritt 38 festgestellt wird, dass eine der oben genannten, zum Schritt 38 genannten Bedingungen nicht erfüllt ist, d.h. das keine beschleunigte Geradeausfahrt vorliegt, wird geprüft, ob ggf. eine nicht-beschleunigte Kurvenfahrt vorliegt. Hierzu wird im Schritt 48 festgestellt, ob die berechnete Fahrzeug-Längsbeschleunigung L_rad betragsmäßig kleiner ist als ein unterer Längsbeschleunigungsschwellenwert SW_LradU. Ferner wird im Schritt 48 geprüft, ob die berechnete oder gemessene Fahrzeug-Querbeschleunigung Q_gier betragsmäßig größer ist als ein oberer Querbeschleunigungsschwellenwert SW_QgierO. Sofern beide Prüfungen bejaht werden müssen, wird festgestellt, dass eine nicht-beschleunigte Kurvenfahrt vorliegt. In diesem Fall erfolgt eine Verzweigung zum Schritt 50 sowie zum Schritt 52.

Im Schritt 50 wird festgestellt, ob das Sensormodul 30 in richtiger Einbaulage, d.h. wie angenommen, also mit seiner Längsachse 36 längs zum Fahrzeug verbaut worden ist, während im Schritt 52 festgestellt wird, ob das Sensormodul 30 nicht in der angenommenen Einbaulage verbaut worden ist, d.h. mit seiner Längsachse 36 quer zum Fahrzeug verbaut worden ist.

Im Schritt 48 wird geprüft, ob die gemessene Modul-Längsbeschleunigung L_sens betragsmäßig kleiner ist als ein unterer Längsbeschleunigungsschwellenwert SW_LsensU. Ferner wird festgestellt, ob die gemessene Modul-Querbeschleunigung Q_sens betragsmäßig größer ist als ein oberer Querbeschleunigungsschwellenwert SW_QsensO. Schließlich wird der Übereinstimmungsgrad zwischen der gemessenen Modul-Querbeschleunigung Q_sens und der berechneten oder gemessenen Fahrzeug-Querbeschleunigung Q_gier ermittelt, indem ermittelt wird, ob deren Differenz betragsmäßig kleiner ist als ein unterer Querbeschleunigungsdifferenzschwellenwert SW_QdiffU. Ist diese Differenz betragsmäßig kleiner als dieser Schwellenwert, ist ein hoher Übereinstimmungsgrad der beiden Querbeschleunigungswerte gegeben. Sofern diese drei Abfragen jeweils bejaht werden können, wird im Schritt 54 ein Signal erzeugt, dass die Einbaulage des Sensormoduls 30 mit der angenommenen Einbaulage übereinstimmt.

Wird hingegen eine der vorstehenden Abfragen im Block 50 verneint, erfolgt eine Verzweigung zurück zum Schritt 38.

Im Schritt 52 wird festgestellt, ob die Einbaulage des Sensormoduls 30 nicht mit der angenommenen Einbaulage übereinstimmt. Hierzu wird geprüft, ob die gemessene Modul-Längsbeschleunigung L_sens betragsmäßig größer ist als ein oberer Längsbeschleunigungsschwellenwert SW_LsensO. Ferner wird festgestellt, ob die gemessene Modul-Querbeschleunigung Q_sens betragsmäßig kleiner ist als ein unterer Querbeschleunigungsschwellenwert SW_QsensU.

Schließlich wird festgestellt, ob die Differenz der gemessenen Modul-Querbeschleunigung Q_sens und der berechneten oder gemessenen Fahrzeug-Querbeschleunigung Q_gier betragsmäßig größer ist als ein unterer Querbeschleunigungsdifferenzschwellenwert SW_QdiffU.

Sofern die vorstehenden Abfragen im Schritt 52 bejaht werden, wird festgestellt, dass die Einbaulage des Sensormoduls 30 nicht der angenommenen Einbaulage entspricht und im Schritt 56 ein Signal erzeugt, dass der Einbau nicht der Sollvorgabe entspricht.

Sofern im Schritt 52 eine der Abfragen verneint wird, erfolgt eine Verzweigung zurück zum Schritt 38.

Anhand der Fig. 3 wurde mittels der Schritte 44 und 54 erläutert, dass die Einbaulage der angenommenen Einbaulage entspricht. Alternativ kann in diesen Schritten jedoch auch festgestellt werden, dass die Einbaulage des Sensormoduls 30 derart ist, dass die Längsachse 36 des Sensormoduls 30 längs zum Fahrzeug 10 ausgerichtet ist.

In entsprechender Weise kann in den Schritten 46 und 56 festgestellt werden, dass die Einbaulage nicht der angenommenen Einbaulage entspricht. Alternativ kann in diesen Schritten jedoch auch festgestellt werden, dass die Einbaulage des Sensormoduls 30 derart ist, dass seine Längsachse nicht längs, sondern quer zum Fahrzeug ausgerichtet ist. Durch einen Vergleich der bestimmten Einbaulage mit einer bereits festgelegten Soll-Einbaulage kann ein Fehlersignal erzeugt werden. Dieses Fehlersignal kann vorteilhafterweise als akustisches, optisches und/oder haptisches Warnsignal in der Fahrerkabine ausgegeben werden. Damit kann der Fahrer gewarnt werden, dass die Fahrdynamikregelung fehlerhaft arbeiten könnte. Der Fahrer wird somit in die Lage versetzt, die Funktionen der Fahrdynamikregelung abzuschalten. Zusätzlich oder alternativ kann das Fehlersignal aber auch dazu herangezogen werden, um automatisch die Funktionen der Fahrdynamikregelung abzuschalten, um somit Fehleingriffe der Fahrdynamikregelung zu vermeiden.

Diese Feststellungen der Einbaulage bzw. Orientierung oder Ausrichtung der Längsachse 36 des Sensormoduls 30 kann im Steuermodul 30 bzw. in dem Fahrdynamikregelsystem in einem Initialisierungsmodus, bspw. sobald das Fahrzeug im Produktionswerk das Band verlässt, gespeichert werden und zwar insbesondere für das restliche Leben des Fahrzeugs. Somit kann ein und derselbe Sensormodultyp sowohl für quer eingebaute als auch für längs eingebaute Sensormodule verwendet werden, ohne dass eine Parametrierung notwendig wäre. Dies ist vorteilhaft im Hinblick auf eine Erhöhung der Stückzahlen baugleicher Sensormodule bzw. Fahrdynamikregeleinrichtungen und somit im Hinblick auf eine Reduzierung der Herstellkosten.

Insgesamt ermöglicht die Erfindung eine einfache Erkennung der Einbaulage eines Sensormoduls eines Fahrdynamikregelsystems, nämlich derart, ob das Sensormodul mit seiner Längsachse längs oder quer im Fahrzeug verbaut ist.

Alle in der vorstehenden Beschreibung und in den Ansprüchen genannten Merkmale sind sowohl einzeln als auch in beliebiger Kombination miteinander einsetzbar. Die Offenbarung der Erfindung ist somit nicht auf die beschriebenen bzw. beanspruchten Merkmalskombinationen beschränkt. Vielmehr sind alle Merkmalskombinationen als offenbart zu betrachten.

### Bezugszeichenliste (Bestandteil der Beschreibung)

- 10: Fahrzeug
- 12: Längsträger
- 14: Querträger
- 16: Rahmen
- 18: Fahrerkabine
- 20: Achsen der Vorderräder
- 22: Vorderräder
- 24: Hinderachsen
- 26: Hinterräder
- 28: Drehzahlsensor
- 30: Sensormodul
- 32: Position am Querträger
- 34: Position am Längsträger
- 36: Längsachse des Sensormoduls
- 38: Schritt zur Erkennung einer beschleunigten Geradeausfahrt
- 40: Schritt zur Erkennung einer richtigen Einbaulage
- 42: Schritt zur Erkennung einer falschen Einbaulage
- 44: Signal Einbau richtig
- 46: Signal Einbau falsch
- 48: Schritt zur Erkennung einer nicht-beschleunigten Kurvenfahrt
- 50: Schritt zur Erkennung einer richtigen Einbaulage
- 52: Schritt zur Erkennung einer falschen Einbaulage
- 54: Signal Einbau richtig
- 56: Signal Einbau falsch

## Patentansprüche

1. Verfahren zum Bestimmen der Einbaulage eines Sensormoduls (30) in einem Fahrzeug (10), nämlich ob das Sensormodul (30) mit seiner Längsachse (36) längs oder quer im Fahrzeug (10) verbaut ist, wobei das Sensormodul (30) einen Längsbeschleunigungssensor zum Messen einer Modul-Längsbeschleunigung (L_sens) in Richtung der Längsachse (36) des Sensormoduls (30) und/oder einen Querbeschleunigungssensor zum Messen einer Modul-Querbeschleunigung (Q_sens) quer zur Längsachse (36) des Sensormoduls (30) aufweist, wobei eine gemessene Modul-Längsbeschleunigung (L_sens) und/oder eine gemessene Modul-Querbeschleunigung (Q_sens) während der Fahrt des Fahrzeugs (10) mit einer Fahrzeug-Längsbeschleunigung (L_rad) und/oder einer Fahrzeug-Querbeschleunigung (Q_gier) verglichen wird, **dadurch gekennzeichnet, dass**
die Fahrzeug-Längsbeschleunigung (L_rad) aus Raddrehzahlen des Fahrzeugs (10) und/oder unter Verwendung von Positionsdaten eines Satellitennavigationssystems und/oder unter Verwendung von Daten eines fahrzeugeigenen Radarsystems berechnet wird und/oder wobei die Fahrzeug-Querbeschleunigung (Q_gier) aus einer Fahrzeuggeschwindigkeit sowie einer Gierrate des Fahrzeuges (10) oder aus Raddrehzahlen des Fahrzeuges (10) berechnet wird, und
anhand des Vergleichs wenigstens ein Übereinstimmungsgrad, welcher die Übereinstimmung einer gemessenen Modul-Beschleunigung (L_sens, Q_sens) und einer berechneten Fahrzeug-Beschleunigung (L_rad, Q_gier) repräsentiert, ermittelt wird und anhand des Übereinstimmungsgrads die Einbaulage des Sensormoduls (30) bestimmt wird.

2. Verfahren nach Anspruch 1, wobei während einer nicht-beschleunigten Kurvenfahrt der Übereinstimmungsgrad zwischen der dann gemessenen Modul-Längsbeschleunigung (L_sens) und der dann berechneten Fahrzeug-Querbeschleunigung (Q_gier) ermittelt wird und, falls der Übereinstimmungsgrad eine vorbestimmte Schwelle überschreitet, die Einbaulage des Sensormoduls (30) derart bestimmt wird, dass seine Längsachse (36) quer zum Fahrzeug (10) ausgerichtet ist, und/oder falls der betreffende Übereinstimmungsgrad eine vorbestimmte Schwelle unterschreitet, die Einbaulage des Sensormoduls (30) derart bestimmt wird, dass seine Längsachse (36) längs zum Fahrzeug (10) ausgerichtet ist.

3. Verfahren nach Anspruch 1 oder 2, wobei während einer nicht-beschleunigten Kurvenfahrt der Übereinstimmungsgrad zwischen der dann gemessenen Modul-Querbeschleunigung (Q_sens) und der dann berechneten Fahrzeug-Querbeschleunigung (Q_gier) ermittelt wird und, falls der Übereinstimmungsgrad eine vorbestimmte Schwelle überschreitet, die Einbaulage des Sensormoduls (30) derart bestimmt wird, dass seine Längsachse (36) längs zum Fahrzeug (10) ausgerichtet ist, und/oder, falls der Übereinstimmungsgrad eine vorbestimmte Schwelle unterschreitet, die Einbaulage des Sensormoduls (30) derart bestimmt wird, dass seine Längsachse (36) quer zum Fahrzeug (10) ausgerichtet ist.

4. Verfahren nach Anspruch 1, wobei während einer beschleunigten Geradeausfahrt der Übereinstimmungsgrad zwischen der dann gemessenen Modul-Querbeschleunigung (Q_sens) und der dann berechneten Fahrzeug-Längsbeschleunigung (L_rad) ermittelt wird und, falls der Übereinstimmungsgrad eine vorbestimmte Schwelle überschreitet, die Einbaulage des Sensormoduls (30) derart bestimmt wird, dass seine Längsachse (36) quer zum Fahrzeug (10) ausgerichtet ist, und/oder, falls der Übereinstimmungsgrad eine vorbestimmte Schwelle unterschreitet, die Einbaulage des Sensormoduls (30) derart bestimmt wird, dass seine Längsachse (36) längs zum Fahrzeug (10) ausgerichtet ist.

5. Verfahren nach Anspruch 1 oder 4, wobei während einer beschleunigten Geradeausfahrt der Übereinstimmungsgrad zwischen der dann gemessenen Modul-Längsbeschleunigung (L_sens) und der dann berechneten Fahrzeug-Längsbeschleunigung (L_rad) ermittelt wird und, falls der Übereinstimmungsgrad eine vorbestimmte Schwelle überschreitet, die Einbaulage des Sensormoduls (30) derart bestimmt wird, dass seine Längsachse (36) längs zum Fahrzeug (10) ausgerichtet ist, und/oder, falls der Übereinstimmungsgrad eine vorbestimmte Schwelle unterschreitet, die Einbaulage des Sensormoduls (30) derart bestimmt wird, dass seine Längsachse (36) quer zum Fahrzeug (10) ausgerichtet ist.

6. Verfahren nach einem der vorhergehenden Ansprüche, wobei auf eine nicht-beschleunigte Kurvenfahrt erkannt wird, wenn der Betrag der Fahrzeug-Längsbeschleunigung (L_rad) null ist oder unterhalb eines unteren Längsbeschleunigungsschwellenwertes (SW_LradU) liegt und der Betrag der Fahrzeug-Querbeschleunigung (Q_gier) oberhalb eines oberen Querbeschleunigungsschwellenwertes (SW_QgierO) liegt, und/oder auf eine beschleunigte Geradeausfahrt erkannt wird, wenn der Betrag der Fahrzeug-Längsbeschleunigung (L_rad) oberhalb eines oberen Längsbeschleunigungsschwellenwertes (SW_LradO) liegt sowie der Betrag der Fahrzeugquerbeschleunigung (Q_gier) null ist oder unterhalb eines unteren Querbeschleunigungsschwellenwertes (SW_QgierU) liegt.

7. Verfahren nach einem der vorhergehenden Ansprüche, wobei die bestimmte Einbaulage mit einer Soll-Einbaulage verglichen wird und bei einer Diskrepanz zwischen diesen Einbaulagen ein Fehlersignal (46, 56) erzeugt wird.

8. Verfahren nach einem der vorhergehenden Ansprüche, wobei die Einbaulage in einem Initialisierungsmodus bestimmt und die derart bestimmte Einbaulage dauerhaft im Fahrzeug (10) gespeichert wird.

9. Einrichtung zum Bestimmen der Einbaulage eines Sensormoduls (30) in einem Fahrzeug (10) , nämlich ob das Sensormodul (30) mit seiner Längsachse (36) längs oder quer im Fahrzeug (10) verbaut ist, wobei die Einrichtung besagtes Sensormodul (30) aufweist, wobei das Sensormodul (30) einen Längsbeschleunigungssensor zum Messen einer Modul-Längsbeschleunigung (L_sens) in Richtung der Längsachse (36) des Sensormoduls (30) und/oder einen Querbeschleunigungssensor zum Messen einer Modul-Querbeschleunigung (Q_sens) quer zur Längsachse (36) des Sensormoduls (30) aufweist, wobei die Einrichtung einen Vergleicher aufweist, der eingerichtet ist, eine gemessene Modul-Längsbeschleunigung (L_sens) und/oder eine gemessene Modul-Querbeschleunigung (Q_sens) mit einer Fahrzeug-Längsbeschleunigung (L_rad) und/oder einer Fahrzeug-Querbeschleunigung (Q_gier) zu vergleichen, **dadurch gekennzeichnet, dass** die Einrichtung so eingerichtet ist, dass die Fahrzeug-Längsbeschleunigung (L_rad) aus Raddrehzahlen des Fahrzeugs (10) oder unter Verwendung von Positionsdaten eines Satellitennavigationssystems oder unter Verwendung von Daten eines fahrzeugeigenen Radarsystems berechnet wird und/oder die Fahrzeug-Querbeschleunigung (Q_gier) aus einer Fahrzeuggeschwindigkeit sowie einer Gierrate des Fahrzeuges (10) oder aus Raddrehzahlen des Fahrzeuges berechnet wird, und die Einrichtung weiter so eingerichtet ist, dass anhand des Vergleichs wenigstens ein Übereinstimmungsgrad, welcher die Übereinstimmung einer gemessenen Modul-Beschleunigung (L_sens, Q_sens) und einer berechneten Fahrzeug-Beschleunigung (L_rad, Q_gier) repräsentiert, ermittelt wird, und die Einrichtung ferner Mittel zum Bestimmen der Einbaulage umfasst, die so eingerichtet sind, dass sie anhand des Übereinstimmungsgrads die Einbaulage des Sensormoduls (30) bestimmen und mit einer Soll-Einbaulage vergleichen und dass bei einer Diskrepanz zwischen diesen beiden Einbaulagen ein Fehlersignal erzeugt wird, wobei das Fehlersignal als akustisches und/oder optisches und/oder haptisches Warnsignal ausgebbar ist und/oder wobei die Funktion eines Fahrdynamikregelsystems durch das Fehlersignal deaktiviert wird.

10. Einrichtung nach Anspruch 9, wobei die Mittel zum Bestimmen der Einbaulage derart ausgebildet sind, dass sie während einer nicht-beschleunigten Kurvenfahrt den Übereinstimmungsgrad zwischen der dann gemessenen Modul-Längsbeschleunigung (L_sens) und der dann berechneten Fahrzeug-Querbeschleunigung (Q_gier) ermitteln und, falls der Übereinstimmungsgrad eine vorbestimmte Schwelle überschreitet, die Einbaulage des Sensormoduls (30) derart bestimmen, dass seine Längsachse (36) quer zum Fahrzeug (10) ausgerichtet ist, und/oder falls der betreffende Übereinstimmungsgrad eine vorbestimmte Schwelle unterschreitet, die Einbaulage des Sensormoduls (30) derart bestimmen, dass seine Längsachse (36) längs zum Fahrzeug (10) ausgerichtet ist.

11. Einrichtung nach Anspruch 9 oder 10, wobei die Mittel zum Bestimmen der Einbaulage derart ausgebildet sind, dass sie während einer nicht-beschleunigten Kurvenfahrt den Übereinstimmungsgrad zwischen der dann gemessenen Modul-Querbeschleunigung (Q_sens) und der dann berechneten Fahrzeug-Querbeschleunigung (Q_gier) ermitteln und, falls der Übereinstimmungsgrad eine vorbestimmte Schwelle überschreitet, die Einbaulage des Sensormoduls (30) derart bestimmen, dass seine Längsachse (36) längs zum Fahrzeug (10) ausgerichtet ist, und/oder, falls der Übereinstimmungsgrad eine vorbestimmte Schwelle unterschreitet, die Einbaulage des Sensormoduls (30) derart bestimmen, dass seine Längsachse (36) quer zum Fahrzeug (10) ausgerichtet ist.

12. Einrichtung nach einem der Ansprüche 9 bis 11, wobei die Mittel zum Bestimmen der Einbaulage derart ausgebildet sind, dass sie während einer beschleunigten Geradeausfahrt den Übereinstimmungsgrad zwischen der dann gemessenen Modul-Querbeschleunigung (Q_sens) und der dann berechneten Fahrzeug-Längsbeschleunigung (L_rad) ermitteln und, falls der Übereinstimmungsgrad eine vorbestimmte Schwelle überschreitet, die Einbaulage des Sensormoduls (30) derart bestimmen, dass seine Längsachse (36) quer zum Fahrzeug (10) ausgerichtet ist, und/oder, falls der Übereinstimmungsgrad eine vorbestimmte Schwelle unterschreitet, die Einbaulage des Sensormoduls (30) derart bestimmen, dass seine Längsachse (36) längs zum Fahrzeug (10) ausgerichtet ist.

13. Einrichtung nach einem der Ansprüche 9 bis 12, wobei die Mittel zum Bestimmen der Einbaulage derart ausgebildet sind, dass sie während einer beschleunigten Geradeausfahrt den Übereinstimmungsgrad zwischen der dann gemessenen Modul-Längsbeschleunigung (L_sens) und der dann berechneten Fahrzeug-Längsbeschleunigung (L_rad) ermitteln und, falls der Übereinstimmungsgrad eine vorbestimmte Schwelle überschreitet, die Einbaulage des Sensormoduls (30) derart bestimmen, dass seine Längsachse (36) längs zum Fahrzeug (10) ausgerichtet ist, und/oder, falls der Übereinstimmungsgrad eine vorbestimmte Schwelle unterschreitet, die Einbaulage des Sensormoduls (30) derart bestimmen, dass seine Längsachse (36) quer zum Fahrzeug (10) ausgerichtet ist.

14. Einrichtung nach einem der Ansprüche 9 bis 13, wobei die Einrichtung derart ausgebildet ist, dass sie auf eine nicht-beschleunigte Kurvenfahrt erkennt, wenn der Betrag der Fahrzeug-Längsbeschleunigung (L_rad) null ist oder unterhalb eines unteren Längsbeschleunigungsschwellenwertes (SW_LradU) liegt und der Betrag der Fahrzeug-Querbeschleunigung (Q_gier) oberhalb eines oberen Querbeschleunigungsschwellenwertes (SW_QgierO) liegt, und/oder auf eine beschleunigte Geradeausfahrt erkennt, wenn der Betrag der Fahrzeug-Längsbeschleunigung (L_rad) oberhalb eines oberen Längsbeschleunigungsschwellenwertes (SW_LradO) liegt sowie die berechnete Fahrzeug-Querbeschleunigung (Q_gier) null ist oder unterhalb eines unteren Querbeschleunigungsschwellenwertes (SW_QgierU) liegt.

15. Einrichtung nach einem der Ansprüche 9 bis 14, wobei die Einrichtung derart ausgebildet ist, dass sie die Einbaulage in einem Initialisierungsmodus bestimmt und die derart bestimmte Einbaulage dauerhaft im Fahrzeug (10) speichert.

16. Fahrzeug mit einer Einrichtung nach einem der Ansprüche 9 bis 15.

## Claims

1. Method for determining the installation position of a sensor module (30) in a vehicle (10), specifically whether the sensor module (30) is installed with its longitudinal axis (36) longitudinally or transversely in the vehicle (10), wherein the sensor module (30) has a longitudinal acceleration sensor for measuring a module longitudinal acceleration (L_sens) in the direction of the longitudinal axis (36) of the sensor module (30) and/or a transverse acceleration sensor for measuring a module transverse acceleration (Q_sens) transversely with respect to the longitudinal axis (36) of the sensor module (30), wherein a measured module longitudinal acceleration (L_sens) and/or a measured module transverse acceleration (Q_sens) are/is compared with a vehicle longitudinal acceleration (L_rad) and/or a vehicle transverse acceleration (Q_gier) while the vehicle (10) is travelling, **characterized in that** the vehicle longitudinal acceleration (L_rad) is calculated from wheel speeds of the vehicle (10) and/or using the position data of satellite navigation system and/or using data of radar system mounted in the vehicle and/or wherein the vehicle transverse acceleration (Q_gier) is calculated from a vehicle speed and a yaw rate of the vehicle (10) or from wheel speeds of the vehicle (10), and
at least one degree of correspondence which represents correspondence between a measured module acceleration (L_sens, Q_sens) and a calculated vehicle acceleration (L_rad, Q_gier) is determined on the basis of the comparison, and the installation position of the sensor module (30) is determined on the basis of the degree of correspondence.

2. Method according to Claim 1, wherein, during non-accelerated cornering the degree of correspondence between the module longitudinal acceleration (L_sens) which is measured then and the vehicle transverse acceleration (Q_gier) which is calculated then is obtained, and if the degree of correspondence exceeds a predetermined threshold the installation position of the sensor module (30) is determined in such a way that its longitudinal axis (36) is oriented transversely with respect to the vehicle (10), and/or if the respective degree of correspondence undershoots a predetermined threshold the installation position of the sensor module (30) is determined in such a way that its longitudinal axis (36) is oriented longitudinally with respect to the vehicle (10).

3. Method according to Claim 1 or 2, wherein, during non-accelerated cornering the degree of correspondence between the module transverse acceleration (Q_sens) which is measured then and the vehicle transverse acceleration (Q_gier) which is calculated then is obtained, and if the degree of correspondence exceeds a predetermined threshold the installation position of the sensor module (30) is determined in such a way that its longitudinal axis (36) is oriented longitudinally with respect to the vehicle (10), and/or if the degree of correspondence undershoots a predetermined threshold the installation position the sensor module (30) is determined in such a way that its longitudinal axis (36) is oriented transversely with respect to the vehicle (10).

4. Method according to Claim 1, wherein, during accelerated straight-ahead driving the degree of correspondence between the module transverse acceleration (Q_sens) which is measured then and the vehicle longitudinal acceleration (L_rad) which is calculated then is obtained, and if the degree of correspondence exceeds a predetermined threshold the installation position of the sensor module (30) is determined in such a way that its longitudinal axis (36) is oriented transversely with respect to the vehicle (10), and/or if the degree of correspondence undershoots a predetermined threshold the installation position of the sensor module (30) is determined in such a way that its longitudinal axis (36) is oriented longitudinally with respect to the vehicle (10).

5. Method according to Claim 1 or 4, wherein during accelerated straight-ahead travel the degree of correspondence between the module longitudinal acceleration (L_sens) which is measured then and the vehicle longitudinal acceleration (L_rad) which is calculated then is obtained, and if the degree of correspondence exceeds a predetermined threshold the installation position of the sensor (30) is determined in such a way that its longitudinal axis (36) is oriented longitudinally with respect to the vehicle (10), and/or if the degree of correspondence undershoots a predetermined threshold the installation position of the sensor module (30) is determined in such a way that its longitudinal axis (36) is oriented transversely with respect to the vehicle (10).

6. Method according to one of the preceding claims, wherein non-accelerated cornering is detected if the absolute value of vehicle longitudinal acceleration (L_rad) is zero or is below a lower longitudinal acceleration threshold value (SW_LradU) and the absolute value of the vehicle transverse acceleration (Q_gier) is above an upper transverse acceleration threshold value (SW-QgierO), and/or accelerated straight-ahead travel is detected if the absolute value of the vehicle longitudinal acceleration (L_rad) is above an upper longitudinal acceleration threshold value (SW LradO) and the absolute value of the vehicle transverse acceleration (Q_gier) is zero or is below a lower transverse acceleration threshold value (SW_QgierU) .

7. Method according to one of the preceding claims, wherein the determined installation position is compared with a setpoint installation position, and when there is discrepancy between these installation positions a fault signal (46, 56) is generated.

8. Method according to one of the preceding claims, wherein the installation position is determined in an initialization mode, and the installation position which is determined in such a way is stored permanently in the vehicle (10).

9. Device for determining the installation position of a sensor module (30) in a vehicle (10),
specifically whether the sensor module (30) is installed with its longitudinal axis (36) longitudinally or transversely in the vehicle (10), wherein the device has said sensor module (30), wherein the sensor module (30) has a longitudinal acceleration sensor for measuring a module longitudinal acceleration (L_sens) in the direction of the longitudinal axis (36) of the sensor module (30) and/or a transverse acceleration sensor for measuring a module transverse acceleration (Q_sens) transversely with respect to the longitudinal axis (36) of the sensor module (30), wherein the device has a comparator which is configured to compare a measured module longitudinal acceleration (L_sens) and/or a measured module transverse acceleration (Q_sens) with a vehicle longitudinal acceleration (L_rad) and/or a vehicle transverse acceleration (Q_gier),
**characterized in that** the device is configured in such a way that the vehicle longitudinal acceleration (L_rad) is calculated from wheel speeds of the vehicle (10) or using position data of a satellite navigation system or using data of a vehicle-mounted radar system, and/or the vehicle transverse acceleration (Q_gier) is calculated from a vehicle speed and a yaw rate of the vehicle (10) or from wheel speeds of the vehicle, and the device is also configured in such a way that at least one degree of correspondence which represents the correspondence between a measured module acceleration (L_sens, Q_sens) and a calculated vehicle acceleration (L_rad, Q_gier) is obtained on the basis of the comparison,
and the device also comprises means for determining the installation position which are configured in such a way they determine the installation position of the sensor module (30) on the basis of the degree of determination, and compare said installation position with a setpoint installation position, and **in that** when there is a discrepancy between these two installation positions a fault signal is generated, wherein the fault signal can be output as an acoustic and/or visual and/or haptic warning signal, and/or wherein the function of a vehicle movement dynamics control system is deactivated by the fault signal.

10. Device according to Claim 9, wherein the means for determining the installation position are embodied in such a way that during non-accelerated cornering said means obtain the degree of correspondence between the module longitudinal acceleration (L_sens) which is measured then and the vehicle transverse acceleration (Q_gier) which is calculated then, and if the degree of correspondence exceeds a predetermined threshold said means determine the installation position of the sensor module (30) in such a way that its longitudinal axis (36) is oriented transversely with respect to the vehicle (10), and/or if the respective degree of correspondence undershoots a predetermined threshold said means determine the installation position of the sensor module (30) in such a way that its longitudinal axis (36) is oriented longitudinally with respect to the vehicle (10).

11. Device according to Claim 9 or 10, wherein the means for determining the installation position are embodied in such a way that during non-accelerated cornering said means obtain the degree of correspondence between the module transverse acceleration (Q_sens) which is measured then and the vehicle transverse acceleration (Q_gier) which is calculated then, and if the degree of correspondence exceeds a predetermined threshold said means determine the installation position of the sensor module (30) in such a way that its longitudinal axis (36) is oriented longitudinally with respect the vehicle (10), and/or if the degree of correspondence undershoots a predetermined threshold said means determine the installation position of the sensor module (30) in such a way that its longitudinal axis (36) is oriented transversely with respect to the vehicle (10).

12. Device according to one of Claims 9 to 11, wherein the means for determining the installation position are embodied in such a way that during accelerated straight-ahead travel said means obtain the degree of correspondence between the module transverse acceleration (Q_sens) measured then and the vehicle longitudinal acceleration (L_rad) calculated then, and if the degree of correspondence exceeds a predetermined threshold said means determine the installation position of the sensor module (30) in such a way that its longitudinal axis (36) is oriented transversely with respect to the vehicle (10), and/or if the degree of correspondence undershoots a predetermined threshold said means determine the installation position of the sensor module (30) in such a way that its longitudinal axis (36) is oriented longitudinally with respect to the vehicle (10).

13. Device according to one of Claims 9 to 12, wherein the means for determining the installation position are embodied that during accelerated straight-ahead travel said means obtain the degree of correspondence between the module longitudinal acceleration (L_sens) measured then and the vehicle longitudinal acceleration (L_rad) calculated then, and if the degree of correspondence exceeds a predetermined threshold said means determine the installation position of the sensor module (30) in such a way that its longitudinal axis (36) is oriented longitudinally with respect to the vehicle (10), and/or if the degree of correspondence undershoots a predetermined threshold said means determine the installation position of the sensor module (30) in such a way that its longitudinal axis (36) is oriented transversely with respect to the vehicle (10).

14. Device according to one of Claims 9 to 13, wherein the device is embodied in such a way that it detects non-accelerated cornering if the absolute value of the vehicle longitudinal acceleration (L_rad) is zero or is below a lower longitudinal acceleration threshold value (SW_LradU), and the absolute value of the vehicle transverse acceleration (Q_gier) is above an upper transverse acceleration threshold value (SW_QgierO), and/or detects accelerated straight-ahead travel if the absolute value of the vehicle longitudinal acceleration (L_rad) is above an upper longitudinal acceleration threshold value (SW_Lrad0) and the calculated vehicle transverse acceleration (Q_gier) is zero or is below a lower transverse acceleration threshold value (SW_QgierU) .

15. Device according to one of Claims 9 to 14, wherein the device is embodied in such a way that it determines the installation position in an initialization mode and permanently stores the installation position determined in this way in the vehicle (10).

16. Vehicle having a device according to one of Claims 9 to 15.

## Revendications

1. Procédé de détermination de la position d'installation d'un module capteur (30) dans un véhicule (10), à savoir si le module capteur (30) est installé avec son axe longitudinal (36) longitudinalement ou transversalement dans le véhicule (10), le module capteur (30) possédant un capteur d'accélération longitudinale destiné à mesurer une accélération longitudinale de module (L_sens) dans la direction de l'axe longitudinal (36) du module capteur (30) et/ou un capteur d'accélération transversale destiné à mesurer une accélération transversale de module (Q_sens) transversalement à l'axe longitudinal (36) du module capteur (30), une accélération longitudinale de module (L_sens) mesurée et/ou une accélération transversale de module (Q_sens) mesurée pendant le déplacement du véhicule (10) étant comparée à une accélération longitudinale de véhicule (L_rad) et/ou une accélération transversale de véhicule **caractérisé en ce que**
l'accélération longitudinale de véhicule (L_rad) est calculée à partir des vitesses de rotation de roue du véhicule (10) et/ou en utilisant des données de position d'un système de navigation par satellite et/ou en utilisant des données d'un système radar propre au véhicule et/ou l'accélération transversale de véhicule (Q_gier) étant calculée à partir d'une vitesse de véhicule ainsi que d'un taux de lacet du véhicule (10) ou à partir des vitesses de rotation de roue du véhicule (10) et
au moins un degré de concordance, lequel représente la concordance d'une accélération de module (L_sens, Q_sens) mesurée et d'une accélération de véhicule (L_rad, Q_gier) calculée, étant identifié à l'aide de la comparaison et la position d'installation du module capteur (30) étant déterminée à l'aide du degré de concordance.

2. Procédé selon la revendication 1, selon lequel, pendant une trajectoire en virage non accélérée, le degré de concordance entre l'accélération longitudinale de module (L_sens) alors mesurée et l'accélération transversale de véhicule (Q_gier) alors calculée est identifié et, dans le cas où le degré de concordance est supérieur à un seuil prédéterminé, la position d'installation du module capteur (30) est déterminée de telle sorte que son axe longitudinal (36) est orienté transversalement par rapport au véhicule (10) et/ou dans le cas où le degré de concordance concerné est inférieur à un seuil prédéterminé, la position d'installation du module capteur (30) est déterminée de telle sorte que son axe longitudinal (36) est orienté longitudinalement par rapport au véhicule (10).

3. Procédé selon la revendication 1 ou 2, selon lequel, pendant une trajectoire en virage non accélérée, le degré de concordance entre l'accélération transversale de module (Q_sens) alors mesurée et l'accélération transversale de véhicule (Q_gier) alors calculée est identifié et, dans le cas où le degré de concordance est supérieur à un seuil prédéterminé, la position d'installation du module capteur (30) est déterminée de telle sorte que son axe longitudinal (36) est orienté longitudinalement par rapport au véhicule (10) et/ou dans le cas où le degré de concordance est inférieur à un seuil prédéterminé, la position d'installation du module capteur (30) est déterminée de telle sorte que son axe longitudinal (36) est orienté transversalement par rapport au véhicule (10).

4. Procédé selon la revendication 1, selon lequel, pendant un déplacement en ligne droite accéléré, le degré de concordance entre l'accélération transversale de module (Q_sens) alors mesurée et l'accélération longitudinale de véhicule (L_rad) alors calculée est identifié et, dans le cas où le degré de concordance est supérieur à un seuil prédéterminé, la position d'installation du module capteur (30) est déterminée de telle sorte que son axe longitudinal (36) est orienté transversalement par rapport au véhicule (10) et/ou dans le cas où le degré de concordance est inférieur à un seuil prédéterminé, la position d'installation du module capteur (30) est déterminée de telle sorte que son axe longitudinal (36) est orienté longitudinalement par rapport au véhicule (10).

5. Procédé selon la revendication 1 ou 4, selon lequel, pendant un déplacement en ligne droite accéléré, le degré de concordance entre l'accélération longitudinale de module (L_sens) alors mesurée et l'accélération longitudinale de véhicule (L_rad) alors calculée est identifié et, dans le cas où le degré de concordance est supérieur à un seuil prédéterminé, la position d'installation du module capteur (30) est déterminée de telle sorte que son axe longitudinal (36) est orienté longitudinalement par rapport au véhicule (10) et/ou dans le cas où le degré de concordance est inférieur à un seuil prédéterminé, la position d'installation du module capteur (30) est déterminée de telle sorte que son axe longitudinal (36) est orienté transversalement par rapport au véhicule (10).

6. Procédé selon l'une des revendications précédentes, selon lequel une trajectoire en virage non accélérée est reconnue lorsque la valeur de l'accélération longitudinale de véhicule (L_rad) est nulle ou se trouve au-dessous d'une valeur de seuil d'accélération longitudinale basse (SW_LradU) et la valeur de l'accélération transversale de véhicule (Q_gier) se trouve au-dessus d'une valeur de seuil d'accélération transversale haute (SW_QgierO) et/ou un déplacement en ligne droite accéléré est reconnu lorsque la valeur de l'accélération longitudinale de véhicule (L_rad) se trouve au-dessus d'une valeur de seuil d'accélération longitudinale haute (SW_LradO) et la valeur de l'accélération transversale de véhicule (Q_gier) est nulle ou se trouve au-dessous d'une valeur de seuil d'accélération transversale basse (SW-QgierU).

7. Procédé selon l'une des revendications précédentes, selon lequel la position d'installation déterminée est comparée à une position d'installation de consigne et un signal d'erreur (46, 56) est généré en cas d'écart entre ces positions d'installation.

8. Procédé selon l'une des revendications précédentes, selon lequel la position d'installation est déterminée dans un mode d'initialisation et la position d'installation ainsi déterminée est mémorisée de manière permanente dans le véhicule (10).

9. Dispositif de détermination de la position d'installation d'un module capteur (30) dans un véhicule (10),
à savoir si le module capteur (30) est installé avec son axe longitudinal (36) longitudinalement ou transversalement dans le véhicule (10), le dispositif possédant ledit module capteur (30), le module capteur (30) possédant un capteur d'accélération longitudinale destiné à mesurer une accélération longitudinale de module (L_sens) dans la direction de l'axe longitudinal (36) du module capteur (30) et/ou un capteur d'accélération transversale destiné à mesurer une accélération transversale de module (Q-sens) transversalement à l'axe longitudinal (36) du module capteur (30), le dispositif possédant un comparateur qui est conçu pour comparer une accélération longitudinale de module (L-sens) mesurée et/ou une accélération transversale de module (Q-sens) mesurée à une accélération longitudinale de véhicule (L_rad) et/ou une accélération transversale de véhicule **caractérisé en ce que** le dispositif est conçu de telle sorte que
l'accélération longitudinale de véhicule (L_rad) est calculée à partir des vitesses de rotation de roue du véhicule (10) ou en utilisant des données de position d'un système de navigation par satellite ou en utilisant des données d'un système radar propre au véhicule et/ou l'accélération transversale de véhicule (Q_gier) est calculée à partir d'une vitesse de véhicule ainsi que d'un taux de lacet du véhicule (10) ou à partir des vitesses de rotation de roue du véhicule et le dispositif est en outre conçu de telle sorte que
au moins un degré de concordance, lequel représente la concordance d'une accélération de module (L_sens, Q_sens) mesurée et d'une accélération de véhicule (L_rad, Q_gier) calculée, est identifié à l'aide de la comparaison et le dispositif comporte en outre des moyens pour déterminer la position d'installation qui sont conçus de telle sorte qu'ils déterminent la position d'installation du module capteur (30) à l'aide du degré de concordance et la comparent à une position d'installation de consigne et **en ce qu'**un signal d'erreur est généré en cas d'écart entre ces deux positions d'installation, le signal d'erreur pouvant être délivré sous la forme d'un signal d'alerte acoustique et/ou optique et/ou haptique et/ou la fonction d'un système de régulation dynamique de la conduite étant désactivée par le signal d'erreur.

10. Dispositif selon la revendication 9, avec lequel les moyens pour déterminer la position d'installation sont configurés de telle sorte que pendant une trajectoire en virage non accélérée, ils identifient le degré de concordance entre l'accélération longitudinale de module (L_sens) alors mesurée et l'accélération transversale de véhicule (Q_gier) alors calculée et, dans le cas où le degré de concordance est supérieur à un seuil prédéterminé, ils déterminent la position d'installation du module capteur (30) de telle sorte que son axe longitudinal (36) est orienté transversalement par rapport au véhicule (10) et/ou dans le cas où le degré de concordance est inférieur à un seuil prédéterminé, ils déterminent la position d'installation du module capteur (30) de telle sorte que son axe longitudinal (36) est orienté longitudinalement par rapport au véhicule (10).

11. Dispositif selon la revendication 9 ou 10, avec lequel les moyens pour déterminer la position d'installation sont configurés de telle sorte que pendant une trajectoire en virage non accélérée, ils identifient le degré de concordance entre l'accélération transversale de module (Q_sens) alors mesurée et l'accélération transversale de véhicule (Q_gier) alors calculée et, dans le cas où le degré de concordance est supérieur à un seuil prédéterminé, ils déterminent la position d'installation du module capteur (30) de telle sorte que son axe longitudinal (36) est orienté longitudinalement par rapport au véhicule (10) et/ou dans le cas où le degré de concordance est inférieur à un seuil prédéterminé, ils déterminent la position d'installation du module capteur (30) de telle sorte que son axe longitudinal (36) est orienté transversalement par rapport au véhicule (10).

12. Dispositif selon l'une des revendications 9 à 11, avec lequel les moyens pour déterminer la position d'installation sont configurés de telle sorte que pendant un déplacement en ligne droite accéléré, ils identifient le degré de concordance entre l'accélération transversale de module (Q_sens) alors mesurée et l'accélération longitudinale de véhicule (L_rad) alors calculée et, dans le cas où le degré de concordance est supérieur à un seuil prédéterminé, ils déterminent la position d'installation du module capteur (30) de telle sorte que son axe longitudinal (36) est orienté transversalement par rapport au véhicule (10) et/ou dans le cas où le degré de concordance est inférieur à un seuil prédéterminé, ils déterminent la position d'installation du module capteur (30) de telle sorte que son axe longitudinal (36) est orienté longitudinalement par rapport au véhicule (10).

13. Dispositif selon l'une des revendications 9 à 12, avec lequel les moyens pour déterminer la position d'installation sont configurés de telle sorte que pendant un déplacement en ligne droite accéléré, ils identifient le degré de concordance entre l'accélération longitudinale de module (L_sens) alors mesurée et l'accélération longitudinale de véhicule (L_rad) alors calculée et, dans le cas où le degré de concordance est supérieur à un seuil prédéterminé, ils déterminent la position d'installation du module capteur (30) de telle sorte que son axe longitudinal (36) est orienté longitudinalement par rapport au véhicule (10) et/ou dans le cas où le degré de concordance est inférieur à un seuil prédéterminé, ils déterminent la position d'installation du module capteur (30) de telle sorte que son axe longitudinal (36) est orienté transversalement par rapport au véhicule (10).

14. Dispositif selon l'une des revendications 9 à 13, avec lequel le dispositif est configuré de telle sorte qu'il reconnaît une trajectoire en virage non accélérée lorsque la valeur de l'accélération longitudinale de véhicule (L_rad) est nulle ou se trouve au-dessous d'une valeur de seuil d'accélération longitudinale basse (SW_LradU) et la valeur de l'accélération transversale de véhicule (Q_gier) se trouve au-dessus d'une valeur de seuil d'accélération transversale haute (SW-QgierO) et/ou il reconnaît un déplacement en ligne droite accéléré lorsque la valeur de l'accélération longitudinale de véhicule (L_rad) se trouve au-dessus d'une valeur de seuil d'accélération longitudinale haute (SW_LradO) et l'accélération transversale de véhicule (Q_gier) calculée est nulle ou se trouve au-dessous d'une valeur de seuil d'accélération transversale basse (SW_QgierU).

15. Dispositif selon l'une des revendications 9 à 14, le dispositif étant configuré de telle sorte qu'il détermine la position d'installation dans un mode d'initialisation et mémorise la position d'installation ainsi déterminée de manière permanente dans le véhicule (10) .

16. Véhicule comprenant un dispositif selon l'une des revendications 9 à 15.
